# EUROPEAN PATENT SPECIFICATION

(11) **EP 1 618 157 B1**
(45) Date of publication and mention of the grant of the patent: **14.03.2007**
(21) Application number: 04729326.1
(22) Date of filing: 23.04.2004
(51) Int. Cl.: C09D 5/16, C08G 67/04, C09D 173/02

(54) **USE OF POLYANHYDRIDES IN ANTIFOULING PAINT AND ANTIFOULING PAINT CONTAINING POLYANHYDRIDES**
VERWENDUNG VON POLYANHYDRIDEN IN ANTIFOULING-LACKEN SOWIE POLYANHYDRIDE ENTHALTENDER ANTIFOULING-LACK
UTILISATION DES POLYANHYDRIDES DANS DES PEINTURES ANTI-SALISSURES ET PEINTURES ANTI-SALISSURES CONTENANT DES POLYANHYDRIDES

(30) Priority: 29.04.2003 NO 20031908
(43) Date of publication of application: 25.01.2006
(73) Proprietor: Jotun AS, 3248 Sandefjord (NO)
(72) Inventor: BÖRVE, Anita, N-3280 Tjodalyng (NO); DAHLING, Marit, N-3214 Sandefjord (NO); AUKRUST, Inger Reidun F., N-3400 Lier (NO); RAKOS, Laszlo, SE-125 40 Älvsjö (SE); NESET, Siren M., N-1414 Trolläsen (NO)
(74) Representative: Hayes, Adrian Chetwynd
(86) International application number: PCT/NO2004/000115
(87) International publication number: WO 2004/096927

(56) References cited:
- EP-A1- 0 608 132
- US-A- 4 792 598
- US-A- 5 321 113
- US-A- 5 348 576

## Description

The present application relates to the use of a polyanhydride which is characterised by the formula -(A)ₐ-(B)_{b}-(C)_{c}-,
wherein
a is an integer exceeding zero,
b and c are zero or an integer greater than zero, and
a+b is an integer of 2 or more and wherein
   A corresponds to one or more structures corresponding to one or more of the following general formulas I, II or III 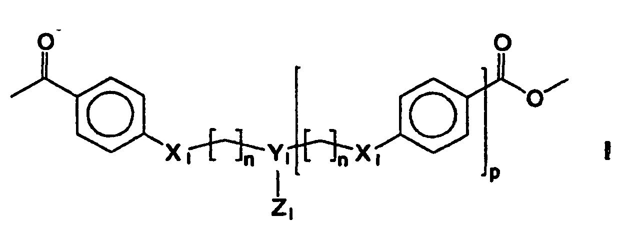 wherein
      X_{I} is O, NH or CH₂
      Y_{I} is N or CH
      Z_{I} is H, C₁₋₁₂ alkyl, -C(O)R¹ or -OC(O)R¹
      R¹ is C₁₋₁₂ alkyl, -R²-C(O)NHR³ or -R²-C(O)OR³
      R² is C₁₋₈ alkylene
      R³ is C₁₋₂₀ alkyl, C₆₋₂₀ aralkyl or C₆₋₂₀ aryl
      n is 0 or an integer from 1 to 8 inclusive;
      p is 0 or 1; 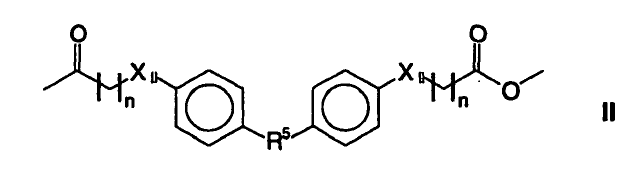
      wherein
      X_{II} is O, NH or CH₂
      R⁵ is branced or straight chain C₁₋₈ alkylene, and
      n is 0 or an integer from 1 to 8 inclusive; 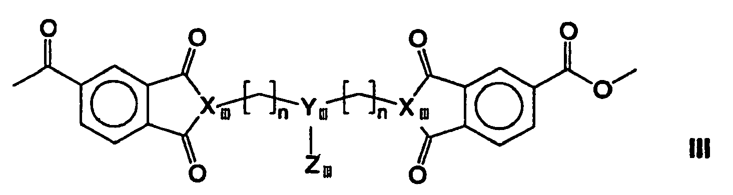
      wherein
      X_{III} is N or CH
      V_{III} is N or CH
      Z_{III} is -C(O)R⁶ or -OC(O)R⁶
      R⁶ is C₁₋₁₂ alkyl, -R⁷-C(O)NHR⁸ or -R⁷-C(O)OR⁸
      R⁷ is C₁₋₈ alkylene
      R⁸ is C₁₋₂₀ alkyl, aralkyl or aryl
      n is 0 or an integer from 1 to 8 inclusive;
   B corresponds to one or more structures with the general formula IV 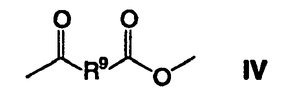 wherein
      R⁹ is C₁₋₁₆ alkylene, C₆₋₂₀ aralkylene or an arbitrary combination of one or more of the units -(CH₂)_{q} -, -(O)ᵣ- and -(phenylene)ₛ -, wherein
      q is 0 or an integer from 1 to 4 inclusive
      r is 0 or an integer from 1 to 3 inclusive
      s is 0 or an integer from 1 to 2 inclusive, and
      q+r+s is an integer of 1 or more,
   and C corresponds to one or more structures with the general formula V

      -R¹⁰-O- **V**
wherein R¹⁰ is one or more groups selected from C₆₋₂₄ arylene, C₆₋₂₀ aralkylene or C₁₋₁₆ alkylene in antifouling paints.

The invention further relates an antifouling paint containing the above polyanhydrides.

Surfaces that are submerged in seawater are subjected to fouling by marine organisms such as green algae, brown algae, barnacles, mussels, tube worms and the like. On marine constructions such as vessels, oil platforms, buoys etc. this fouling may result in increased load and accelerated corrosion. On vessels the fouling will result in reduced manoeuvrability and will also increase the friction which will cause a reduction of the speed and increased fuel consumption.

To prevent attachment and growth of such marine organisms coatings known as antifouling paints are used. These paints usually consist of a film-forming binder with or without biological activity, together with different components such as pigments, fillers, solvents and biologically active substances,

Of the antifouling types of paint that have been used in the recent years, self-polishing antifouling paints containing organotin polymers have been extensively used. These types of paint are e.g. described in GB1457590 and GB2152947. The success with the self-polishing triorganotin containing paints is due to the fact that the organotin polymer on the paint surface hydrolyzes in seawater to release triorganotin compounds which are very effective biologically active compounds. The remaining polymer on the surface becomes hydrophilic and thereby erodable so that it becomes self-polishing. This self-polishing effect provides controlled release of the biologically active compound and contributes to provide a smooth surface, which results in reduced friction between vessel (marine construction) and water.

In the recent years focus has been put on the environmental effects of the use of triorganotin compounds. It has been found that the organotin compounds that are released during the hydrolysis, in particular tributyltin, are slowly degraded, and this will result in an accumulation in the sediments in localised areas. In addition it has been found that some organisms have shown extreme sensitivity to these compounds, and this has resulted in several non-lethal effects such as imposex in the snail *Nucella lapillus* and increased thickness of oyster shell such as e.g. *Crassostrea gigas.*

Consequently increased restrictions on organotin compound as to their use has been imposed. The International Maritime Organisation, IMO, has approved a treaty with a global prohibition against use of organotin compounds as biocide in antifouling paint from January 1, 2003.

As a result of this, several tin free antifouling systems have been developed and introduced. These paints are e.g. described in WO-8402915, EP-646630, EP-802243 and WO-9606870. Described here are self-polishing antifouling paints wherein instead of incorporating organotin groups in the used polymer, organosilyl groups or organic acids bound to metal atoms is incorporated. Characteristic also for these self-polishing tin free antifouling systems is that they consist of polymers with groups which can be hydrolyzed and which secure the controlled dissolution of the polymers and thereby release of antifouling biologically active compounds.

In WO-9641841 and WO-9641842 acrylic acid or methacrylic acid esters are described, which are reported to hydrolyze in contact with sea water and thereby give a self-polishing system.

On the other hand, experience shows that these systems often do not possess the required hydrolyzis rate which is necessary to obtain sufficient polishing and antifouling effect.

In EP-0659848 and EP-0608132 the use of unsaturated anhydrides in copolymers together with acrylic acid esters or methacrylic acid esters are described. GB-2249791 describes the use of paint containing vinyl polymers with anhydride side groups with hydrocarbon or siloxane end groups. EP-0561342 also describes the use of vinyl polymers with anhydride side groups.

In JP-04139284 the use of anhydride polymers from simple unbranched diacids wherein the hydrolyzeable anhydride bonds lies in the main chain of the polymer is described.

We have found that the use of related polymers of these, wherein the hydrolyzeable anhydride bonds are situated in the main chain of the polymer and the polyanhydrides have special structures, are suited for the use in self-polishing antifouling coatings. The present invention differs substantially from earlier technology by the fact that the polymers contain branching, which contribute to increased solubility. Hydrolysis rate and polishing can be controlled by the structure and size of the branching, the structure of the main chain and the density of the anhydride groups. The antifouling properties are obtained by the fact that the polymer hydrolyzes and polishes and the antifouling biologically active components are released.

The present invention relates to the use of a polymer characterised by that it can be described by the formula -(A)ₐ-(B)_{b}-(C)_{c}-, wherein a is an integer greater than zero, b and c are zero or an integer greater than zero, a+b is an integer greater than 2 and wherein
A corresponds to one or more structures corresponding to one or more of the following general formulas I, II or III 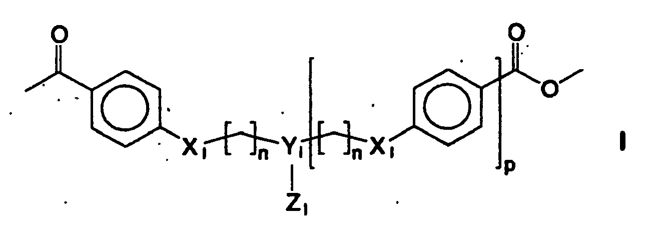 wherein
   X_{I} is O, NH or CH₂
   Y_{I} is N or CH
   Z_{I} is H, C₁₋₁₂ alkyl, -C(O)R¹ or -OC(O)R¹
   R¹ is C₁₋₁₂ alkyl, -R²-C(O)NHR³ or -R²-C(O)OR³
   R² is C₁₋₈ alkylene
   R³ is C₁₋₂₀ alkyl, C₆₋₂₀ aralkyl or C₆₋₂₀ aryl
   n is 0 or an integer from 1 to 8 inclusive
   p is 0 or 1; 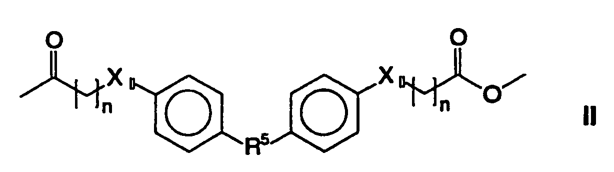
   wherein
   X_{II} is O, NH or CH₂
   R⁵ is branced or unbranched C₁₋₈ alkylene and
   n is 0 or an integer from 1 to 8 inclusive; 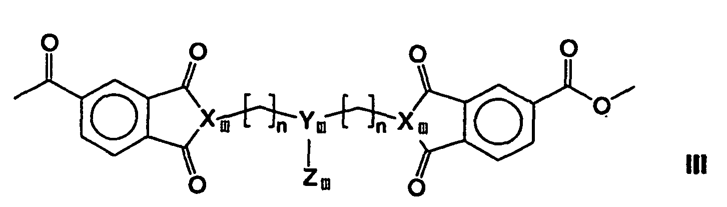
   wherein
   X_{III} is N or CH
   Y_{III} is N or CH
   Z_{III} is -C(O)R⁶ or -OC(O)R⁶
   R⁶ is C₁₋₁₂ alkyl, -R⁷-C(O)NHR⁸ or -R⁷-C(O)OR⁸
   R⁷ is C₁₋₈ alkylene
   R⁸ is C₁₋₂₀ alkyl, aralkyl or aryl
   n is 0 or an integer from 1 to 8 inclusive;
B corresponds to one or more structures of the general formula IV 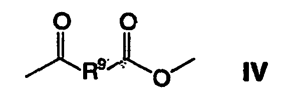 wherein
   R⁹ is C₁₋₁₆ alkylene, C₆₋₂₀ aralkylene or an arbitrary combination of one or more of the units -(CH₂)_{q}-, -(O)ᵣ- and -(phenylene)ₛ-, wherein
   q is 0 or an integer from 1 to 4 inclusive
   r is 0 or an integer from 1 to 3 inclusive
   s is 0 or an integer from 1 to 2 inclusive, and
   q+r+s is an integer greater than 1,
and C corresponds to one or more structures of the general formula V

   -R¹⁰-O- **V**
wherein R¹⁰ is one or more groups selected from C₆₋₂₄ arylene, C₆₋₂₀ aralkylene or C₁₋₁₆ alkylen.

All alkyl- and aralkyl groups mentioned above can be both unbranched and branched.

Aryl can be hetheroaryl or aryl.

Compounds which can be used as starting materials for component A for preparation of binders for antifouling coatings can be diacids or other synthetic equivalent groups with main chain structure M, as in HOOC-M-COOH, corresponding to the main chain structurs in formulas I-III. Synthetic equivalent groups can be diacid chlorides, dianhydrides, dialkyl esters, trimethylsilyl esters of diacids, sodium and potassium salts of diacids.

For alkyl groups in A with structures corresponding to formula I, Z_{I} and R¹ can be C₁₋₁₂ alkyl, preferably C₁₋₈ alkyl and especially preferred C₁₋₅ alkyl, R² can be C₁₋₈ alkylene, preferably C₁₋₅ alkylene, and R³ can be C₁₋₂₀ alkyl, preferably C₁₋₁₅ alkyl, especially preferrd C₁₋₁₀ alkyl. For the mentioned alkyl groups in A with structures corresponding to formula II, R⁵ can be C₁₋₈ alkylene, preferably C₁₋₅ alkylene. For the mentioned alkyl groups in A with structures corresponding to formula III, R⁶ can be C₁₋₁₂ alkyl, preferably C₁₋₈ alkyl and especially preferred C₁₋₅ alkyl, R⁷ can be C₁₋₈ alkylene, preferably C₁₋₅ alkylene and R⁸ can be C₁₋₂₀ alkyl, preferably C₁₋₁₀ alkyl, especially preferred C₁₋₅ alkyl. For the structures I and III, n can be 0 or an integer from 1 to 8, preferably 0 or an integer from 1 to 5, especially preferred 0 or an integer from 1 to 2. For the structure II, n can be 0 or an integer from 1 to 8, preferably 0 or an integer from 1 to 5. More definite examples of A is evident from the examples.

In one embodiment of the invention, the polyanhydride according to the invention is water insoluble, water erodable and film forming.

In another aspect the present invention relates to a process for preparation of polyanhydride with the formula

-(A)ₐ-(B)_{b}-(C)_{c}-,

wherein
a is an integer greater than zero,
b and c is zero or an integer greater than zero, and
a+b is an integer of 2 or more, and where
   A corresponds to one or more structures corresponding to one or more av the following general formulas I, II or III 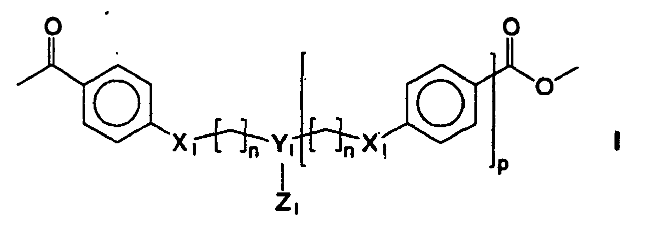 wherein
      X_{I} is O, NH or CH₂
      Y_{I} is N or CH
      Z_{I} is H, C₁₋₁₂ alkyl, -C(O)R¹ or -OC(O)R¹
      R¹ is C₁₋₁₂ alkyl, -R²-C(O)NHR³ or -R²-C(O)OR³
      R² is C₁₋₈ alkylene
      R³ is C₁₋₂₀ alkyl, C₆₋₂₀ aralkyl or C₆₋₂₀ aryl
      n is 0 or an integer from 1 to 8 inclusive
      p is 0 or 1; 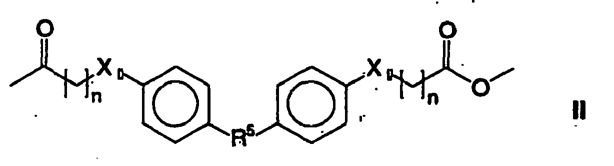
      wherein
      X_{II} is O, NH or CH₂
      R⁵ is branched or unbranched C₁₋₈ alkylene and
      n is 0 or an integer from 1 to 8 inclusive; 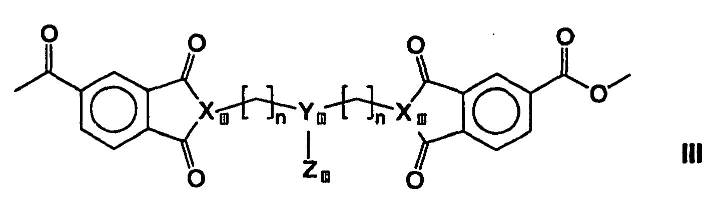
      wherein
      X_{III} is N or CH
      Y_{III} is N or CH
      Z_{III} is -C(O)R⁶ or -OC(O)R⁶
      R⁶ is C₁₋₁₂ alkyl, -R⁷-C(O)NHR⁸ or -R⁷-O(O)OR⁸
      R⁷ is C₁₋₈ alkylene
      R⁸ is C₁₋₂₀ alkyl, aralkyl or aryl
      n is 0 or an integer from 1 to 8 inclusive;
   B corresponds to one or more structures of the general formula IV 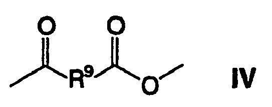 wherein
      R⁹ is C₁₋₁₆ alkylene, C₆₋₂₀ aralkylene or an arbitrary combination of one or more of the units -(CH₂)_{q} -, -(O)ᵣ - and -(phenylene)ₛ -, wherein
      q is 0 or an integer from 1 to 4 inclusive
      r is 0 or an integer from 1 to 3 inclusive
      s is 0 or an integer from 1 to 2 inclusive and
      q+r+s is an integer of 1 or more.
   and C corresponds to one or more structures of the general formula V

      -R¹⁰-O- **V**
wherein R¹⁰ is one or more groups selected from C₆₋₂₄ arylene, C₆₋₂₀ aralkylene or C₁₋₁₆ alkylene, characterised by polycondensation of condensable units such as dicarboxylic acids, dicarboxsylic acid chlorides, trimethylsilyl esters of dicarboxylic acids and dianhydrides in the precence of catalyst.

The invention relates to the use of the polyanhydride according to the invention for preparation of an antifouling paint.

In yet a further aspect the invention relates to an antifouling paint characterised by that it contains polyanhydride according to the invention, together with, if appropriate, additives and auxiliary agents such as co-binders, pigments, solvents, biocides, antisettling agents and stabilizers.

Examples of compounds which can be used as starting materials for component B for preparation of binders for antifouling coatings defined by the structure IV comprise:
linear diacids such as 1,3-propanedioic acid, 1,4-butanedioic acid, 1,5-pentanedioic acid, 1,6-hexanedioic acid, 1,7-heptanedioic acid, 1,8-octanedioic acid, 1,9-nonanediacid, 1,10-decanedioic acid, 1,11-undecanedioic acid, 1,12-dodecanedioic acid, 1,13-tridecanedioic acid, 1,14-tetradecanedioic acid, 1,15-pentadecanedioic acid, 1,16-hexadecanedioic acid, 1-18-octadecanedioic acid;
substituted diacids such as 2-methyl-1,3-propanedioic acid, 2,2-dimethyl-1,3-propanedioic acid, 2-ethyl-1,3-propanedioic acid, 2,2-diethyl-1,3-propanedioic acid, 2-isopropyl-1,3-propanedioic acid, 2-butyl-1,3-propanedioic acid, 2,2-dibutyl-1,3-propanedioic acid, 2-hexyl-1,3-propanedioic acid, 2-decyl-1,3-propanedioic acid, 2-phenyl-1,3-propanedioic acid, 2-benzyl-1,3-propanedioic acid, 2-methyl-1,4-butanedioic acid, 2,2-dimethyl-1,4-butanedioic acid, 2,3-dimethyl-1,4-butanedioic acid, 2-isopropyl-1,4-butanedioic acid, 2-cyclohexyl-1,4-butanedioic acid, 2-phenyl-3-methyl-1,4-butanedioic acid, 2-phenyl-2-propyl-1,4-butanedioic acid, 2-phenyl-2,3-dimethyl-1,4-butanedioic acid, 2-phenyl-1,4-butanedioic acid, 2,3-diphenyl-1,4-butanedioic acid, 2-benzyl-1,4-butanedioic acid, 2-methyl-1,5-pentanedioic acid, 3-methyl-1,5-pentanedioic acid, 2,2-dimethyl-1,5-pentanedioic acid, 2,3-dimethyl-1,5-pentanedioic acid, 2,4-dimethyl-1,5-pentanedioic acid, 3,3-dimethyl-1,5-pentanedioic acid, 3-ethyl-3-methyl-1,5-pentanedioic acid, 3,3-diethyl-1,5-pentanedioic acid, 3-ethyl-3-phenyl-1,5-pentanedioic acid, 3-phenyl-3-propyl-1,5-pentanedioic acid, 3-phenyl-1,5-pentanedioic acid, 3-methyl-1,6-hexanedioic acid, 2,5-dimethyl-1,6-hexanedioic acid, 3-(*tert*-butyl)-1,6-hexanedioic acid, 2-phenyl-2-methyl-1,6-hexanedioic acid, 2-phenyl-1,6-hexanedioic acid and 3-benryl-1,6-hexanedioic acid;
aromatic diacids such as phthalic acid, isophthalic acid, terephthalic acid, 2,5-dimethylterephthalic acid, 2,6-dimethylterephthalic acid, 2-carboxyphenylacetic acid, 1,2-phenytenediacetic acid, 1,3-phenylenediacetic acid, 1,4-phenylenediacetic acid, 3-[2-(carboxymethyl)phenyl]propane acid, 1,3-phenylenedipropan acid, 1,4-phenylenedipropionic acid, 3-(2,carboxyphenyl)propane acid and 3-(4-carboxyphenyl)propane acid;
other diacids such as 2,2'-oxydiacetic acid, 3,6-dioxa-1,8-octanedioic acid, 3,6,9-trioxa-1,11-undecanedioic acid, 1,2-cyclohexanedicarboxylic acid, 1,3-cyclohexanedicarboxylic acid, 1,4-cyclohexanedicarboxylic acid, 4,4'-(ethylenedioxy)dibenzoic acid, 4,4'-(1,3-propylenedioxy)dibenzoic acid, 1,3-bis(4-carboxyphenoxy)propane, 1,2-phenylenedioxydiacetic acid, 1,3-phenylenedioxydiacetic acid, 1,4-phenylenedioxydiacetic acid and 4-carboxyphenoxyacetic acid;
or acid chlorides of all diacids mentioned above.

Preferred examples of compounds which can be used as starting materials for component B for preparation of binders for antifouling coatings defined by the structure IV comprises: 1,8-octanedioic acid, 1,9-nonanedioic acid, 1,10-decanedioic acid, 1,11-undecanedioic acid, 1,12-dodecanedioic acid, 3-methyl-1,6-hexanedioic acid, 3-(*tert*-butyl)-1,6-hexanedioic acid, 3,6-dioxa-1,8-octanedioic acid, 3,6,9-trioxa-1,11-undecanedioic acid, isophthalic acid, terephthalic acid, 1,3-phenylenediacetic acid, 1,4-phenylenediacetic acid, 1,4-phenylenedipropionic acid and acid chlorides of the mentioned diacids.

Examples of compounds which can be used as starting materials for component C for preparation of binders for antifouling coatings defined by the structure V comprise:
unbranched alcohols such as 1,2-etanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,14-tetradecanediol and 1,16-hexadecanediol;
branched and cyclic diols such as 1,2-propanediol, 2-methyl-1,3-propanediol, 2,2-dimethyl-1,3-propanediol, 2,2-diethyl-1,3-propanediol, 2,2-dibutyl-1,3-propanediol, 2-ethyl-2-methyl-1,3-propanediol, 2-methyl-2-propyl-1,3-propanediol, 2-butyl-2-methyl-1,3-propanediol, 2-butyl-2-ethyl-1,3-propanediol, 3-*tert*-butoxy-1,2-propanediol, 1,2-butanediol, 1,3-butanediol, 2,3-butanediol, 2-methyl-1,4-butanediol, 2-methyl-2,3-butanediol, 3-methyl-1,3-butanediol, 2,2-dimethyl-1,3-butanediol, 2,3-dimethyl-2,3-butanediol, 3,3-dimethyl-1,2-butanediol, 1,2-pentanediol, 1,4-pentanediol, 2,4-pentanediol, 3-methyl-1,5-pentanediol, 2-methyl-2,4-pentanediol, 2,4-dimethyl-2,4-pentanediol, 1,2-hexanediol, 1,5-hexanediol, 2,5-hexanediol, 2,5-dimethyl-2,5-hexanediol, 2-ethyl-1,3-hexanediol, 1,4-heptanediol, 2,6-heptanediol, 3-methyl-2,4-heptanediol, 1,2-octanediol, 3,6-octanediol, 3,6-dimethyl-3,6-octanediol, 2,7-dimethyl-2,7-octanediol, 2-butyl-1,3-octanediol, 1,3-nonanediol, 5-ethyl-3-methyl-2,4-nonanediol, 7-ethyl-2-methyt-4,6-nonanediol, 1,2-decanediol, 1,2-dodecanediol, 1,2-tetradecanediol, 1,2-hexadecanediol, 1,2-cyclopentanediol, 1,3-cyclopentanediol, 1,2-cyclohexanediol, 1,3-cyclohexanediol, 1,4-cyclohexanediol, 1,2-cyclohexanedimetanol, 1,3-cyclohexanedimetanol, 1,4-cyclohexanedimetanol, 4,4'-bicyclohexyldiol and 4,4'-isopropylidenedicyclohexanol;
aromatic diols such as hydroquinone, 1,2-benzenediol, 1,3-benzenediol, 4-methyl-1,2-benzenediol, 4-methyl-1,3-benzenediol, 1,2-benzenedimethanol, 1,3-benzenedimethanol, 1,4-benzenedimethanol, 2,2'-biphenol, 4,4'-biphenol, 3,3'-dimethyl-4,4'-biphenol, bisphenol A, 4,4'-methylenediphenol, 4,4'-ethylidenediphenol, 4,4'-propylidenediphenol, 4,4'-(1,3-dimethylbutylidene)diphenol, 4,4'-methylene-bis(2,6-dimethylphenol), 4,4'-isopropylidenebis(2,6-diranethytphenol), 4,4'-(1,3-phenylenedlisopropylidene)diphenol, 4,4'-(1,4-phenylenediisopropylidene)diphenol, 1-phenyl-1,3-propanediol, R-phonyl-1,3-propanediol, 1,4-diphenyl-2,3-butahediol, 1-phenyl-1,5-pentanediol, 2-benzyl-1,3-propanediol and 2-benzyl-2-methyl-1,3-propanediol.

Preferred examples of compounds which can be used as starting materials for component C for preparation of binders for antifouling coatings defined by structure V comprise: 1,5-pentanediol, 1,6-hexanediol, 1,7-heptanediol, 1,8-octanediol, 1,9-nonanediol, 1,10-decanediol, 1,12-dodecanediol, 2-methyl-1,4-butanediol, 3-methyl-1,5-pentanediol, 2,7-dimethyl-2,7-octanediol, bisphenol A, 4,4'-methylenediphenol, 4,4'-ethylidenediphenol and 4,4'-propylidenadiphenol.

The polyanhydrides according to the invention can be prepared both by condensation polymerisation and by melt polymerisation. By synthesis of the polyanhydrides by condensation reaction, a trimethylsilyl ester of the desired diacid with the desired acid chloride is condensed by means of a catalyst. Suitable catalysts can be compounds such as quaternary ammonium halides. By melt polymerisation a prepolymer is synthesized by condensation of the desired acid functional compounds and acetic acid anhydride. The prepolymer is polymerized in the melt by means of a suitable polymerisation catalyst. Suitable polymerisation catalysts can be compounds such as cadmium acetate, magnesium oxide, calsium oxide, barium oxide, calsium carbonate, aluminium isopropoxide, aluminium-*tert*-butoxide, diethylzinc and complexes of diethylzinc and hydroxylated molecules such as water.

Polyanhydrides, and especially aliphatic polyanhydrides, are knowm to hydrolyze fast. The hydrolyzis is depending on the structure of the polyanhydrides, and by combining aliphatic and aromatic structures it is possible to control the hydrolyzis rate and the degradation of the polymers. Incorporation of aromates in the polymer chain regulates the rate of the hydrolysis and increases the mechanical strength of the system. Anhydrides of aromatic diacids are, however, insoluble in common organic solvents. To obtain the best possible solubility and at the same avoiding polymer systems that are too brittle, we have found that it is advantageous that the polyanhydrides contain aromatics separated by an alkyl chain of a certain length. Our work further shows that especially good properties are obtained when the anhydride chain contains two aromatics with a relative short alkyl chain therebetween. It is further advantageous that the alkyl chain has a branching which makes the polymer more flexible. The branching will also contribute to improved solubility and reduced viscosity in solution. The side chain or the branching can further contain different functional groups which further regulate the properties of the polymer, e.g. hydrophilicity and how available the anhydride bonds are for hydrolysis.

An antifouling paint which is going to polish is dependent on that the polymer which is used hydrolyzes at a certain rate. The polishing can thereby be regulated by among other factors the structure of the polymer, by varying the composition of aromatic and aliphatic part in the main chain and chain length and structure of the aliphatic part in the main chain and side chain as described above. The rate of hydrolysis and thereby the polishing rate can further be controlled by choice of structure of the monomers from which the polymer is built up and the relative amounts of these. For the polymers according to the invention an increased amount of component C represented by the structure V is e.g. reducing the polishing rate of the antifouling paint and an increased amount of component B represented by the structure IV will give a system which polishes faster. The rate of hydrolysis can also be regulated by using mixtures of polymers with different rate of hydrolysis.

The polymers used according to the invention hydrolyze in slightly alkaline environment such as seawater and are suitable for use in self-polishing antifouling paint. When the polymer hydrolyzes in contact with seawater, the polymer gradually becomes hydrophilic and erodable, which means that it is washed away by seawater being in motion, e.g. when a ship is moving. New polymer surface is exposed and is ready for exposure to sea water with following hydrolysis and polishing. This makes the foundation of a self-polishing antifouling paint with lasting antifouling effect.

A typical antifouling paint according to the invention consists of binders and one or more other components. These binders can be polymers according to the invention, possibly mixtures of more polymers according to the invention, and other binders.

A typical antifouling paint according to the invention can also consist of the polymer described above in mixture with other polymers as described in NO-2002 0846.

A typical antifouling paint according to the invention can also consist of the polymer described above in mixture with other polymers as described: in EP-1127925.

It will be understood by those familiar with such formulations, that the binder phase also can contain other co-binders such as for rosin, plasticizers or others as examplified in the following.

Examples of co-binders comprise rosin, rosin derivatives and metal salts of rosin as such as tall oil rosin, gum rosin, wood rosin, hydrogenated rosin, fumaric acid gum rosin ester, maleic acid rosin ester, polymerized rosin, dimerized rosin, zinc rosinate, copper rosinate, calsium rosinate, potassium rosinate or others as described in WO-9744401 and WO-9615198;
other co-binders such as castor oil and derivatives of castor oil, linseed oil and derivatives of linseed oil, soybean oil and derivatives of soybean oil, coconut oil and derivatives of coconut oil;
vinyl chloride and copolymers of vinyl chloride;
styrene copolymers such as styrene/(meth)akrylat-copoylymers; saturated polyesters such as polyvinyl acetate; alkydes and modified alkydes; hydrocarbon resins such as petroleum fraction condensates.

Examples of plasticizers include chlorinated paraffines;
phthalates such as dibutyl phthalate, benzylbutyl phthalate, dioctyl phthalate, dinonyl phthalate and diisodecyl phthalate;
phosphate esters such as tricresyl phosphate, nonylphenyl phosphate, octyloxypoly(ethylenoxy)ethyl phosphate, tributoxyethyl phosphate, isooctyl phosphate and 2-ethylhexyl-diphenyl phosphate;
sulfonamides such as N-ethyl-para-toluen-sulfonamide and alkyl-para-toluensulfonamide;
adipates such as for example bis(2-ethylhexyl)adipate, diisobutyl adipate and dioctyl adipat ; and others such as for example phosphoric acid triethylester, butyl stearate, sorbitane triolate and epoxydated soya(bean) oil.

The other components included in the paint can be biologically active substances, pigments and fillers, surfactants, wetting agents and dispersing agents, drying agents, activators, foam inhibitors, stabilizers, antioxidants, corrosion inhibitors, coalescent agents, thickeners and anti-settling agents, fibers and solvents.

The total binder composition gives the paint the necessary self-polishing and broad mechanical properties. In addition it is necessary to use different compounds to control adherence and growth of fouling organisms. These biologically active compounds can generally be divided into two groups, i.e. inorganic and organic compounds.

Inorganic biologically active compounds include different copper compounds including oxides, salts, metals and alloys, either used alone or several in combination. Specific examples are copper oxide, copper thiocyanate, copper metal and copper-nickel metal. This category also includes barium metaborate.

The organic biologically active compounds include both pure organic and organometallic substances which are today extensively used in antifouling technology or which are evaluated for this technology. These are generally used in combinaton with inorganic compounds to give better performance, but can also be used i paints which do not contain these. The most commonly used materials of this type today are available under the commercial names Copper Omadine, Zinc Omadine, Zinc-Pyrion, Sea-Nine 211, Irgarol 1051, Preventol A4, Preventol A5, Preventol A6, Diuron, Zineb and PK. These and others are listed in The European Council of the Paint, Printing Ink and Artists Colours Industri (CEPE)'s list of antifouling compounds which were available on the European market in 1998 (Utilisation of more "Environmentally Friendly" Antifouling Products, EC project No96/559/ 3040/DEB/E2, Final Report, July 1999), and these are hereby included as reference.

Organometallic compounds include organocopper, zinc and manganese compounds.

Examples of organocopper compounds include copper pyrition, oxine copper, copper nonylphenolsulphonate, copper naphtenate, copper acetate, copper bis(ethylendiamine)bisdodecylbenzenesulphonate and copper bis(pentachlorophenolate).

Examples of organozinc compounds inkludes zinc pyrithione, zinc dimethyldithiocarbamate, zinc ethylene-bis(dithiocarbamate) and manganese ethylene-bis(ditiocarbamate) polymer complexed with zinc salt. An example of organomanganese compound is manganese ethylenebis(dithiocarbamate) polymer.

Examples of heterocyclic nitrogen containing compounds include 2-methylthio-4-*tert*-butylamino-6-cyclopropylamino-triazine, 2,3,5,6-tetrachtoro-4-(methylsulfonyl)pyridine and pyridinetriphenylborane.

Examples of heterocyclic sulphur containing compounds include 4,5-dichloro-2-octyl-3(2H)-isothiazolone, 1,2-benzisothiazoline-3-one and 2-(thiocyanomethylthio)-benzothiazole.

Examples of urea derivatives include 3-(3,4-dichlorophenyl)-1,1-dimethylurea.

Examples of amides and imides of carboxylic acids, sulfonic and sulfenic acids include N-(dichlorofluoromethylthio)phthalimide, N,N-dimethyl-N-phenyl-(dichlorofluormethylthio)sulfamide and 1,1-dichloro-N-((dimethylamino)sulfonyl)-1-fluoro-N-(4-methylphenyl)metanesultenamide.

Examples of salts or esters of carboxylic acids include 2-((3-iodo-2-propynyl)oxo)-ethanolphenyl carbamate and 3-iodo-2-propynyl-N-butyl carbamate.

Examples of amines include dehydroabethylamines and coconut dimethylamine.

Examples of substituted benzene include 2,4,5,6-tetrachtoro-1,3-benzene dicarbonitrile and 1-((diiodomethyl)sulfonyl)-4-methylbenzene.

Other examples can be tetraalkylphosphonium halogenides and guanidine derivatives.

When the organic and metal organic active compounds are used in combination with inorganic active compounds such as for example copper oxide, copper thiocyanate and metallic copper, the amounts of organic and metal organic active compounds will typical be lower than when these are used alone.

These organic and organometallic active compounds can also be used in combination with other organic and organometallic active compounds in absence of inorganic active compounds.

In many antifouling paints the biologically active compounds represent the main part of the pigments. In addition different compounds can be included. These components are either designated as pigments or as fillers, depending on their refraction index.

An important property of the pigments or the fillers is the degree of water solubility. This is especially the case when considering the self-polishing antifouling paints based on a hydrolyzing binder. Pigments or fillers can be divided into those which are sensitive to water or soluble in water and those which are not sensitive to water or insoluble in water. The first category includes pigments or fillers which are biologically active as mentioned earlier. Examples of these include copper oxide and copper thiocyanate. Other pigments or fillers in this category include zinc oxide, silver chloride, silver oxide, calcium fluoride, calcium hydrogen phosphate, calcium phosphate, calcium silicate, iron carbonate, iron carbonyl, magnesium hydroxide, magnesium dihydroxide, magnesium carbonate, manganese carbonate, zinc chromate, zinc carbonate, zinc sulphide. In self-polishing systems, as described herein, such substances can be used to adjust the polishing rate of the paint. These components can be used alone or in combination.

The water insoluble pigments or fillers in this group are very comprehensive and when these are used in self-polishing systems, which are described in this patent, they can reduce the polishing rate of the paint. Examples of these include talc, dolomites, calcium carbonate, mica, barium sulphate, China clay, silica, perlite, magnesium oxide, calcite and quartz powder. Other water insoluble pigments include titanium dioxide, iron oxide, graphite and carbon black. These are generally used in combination with water soluble components.

Examples of surfactants include derivatives of propylene oxide and ethylene oxide such as alkyl phenol / ethylene oxide condensates; ethoxylated monoethanol amides of unsaturated fatty acids such as ethoxylated monoethanol amides of linolenic acid; and other such as for example sodium dodecylsulfate, alkylphenol ethoxylates and soya-lecitine.

Examples of wetting agents and dispersing agents include those which are described in detail in M. Ash and I. Ash., Handbook of Paint and Coating Raw Materials, Vol. 1, 1996, Gower Publ. Ltd., Great Britain, s. 821-823, 849-851.

Examples of drying agents include metal octoates and metal naphtenates;

Examples of activators include salicylic acid and benzyl alcohol;

Examples of defoamers include silicone oils and aromatic or aliphatic mineral oils;

Examples of stabilizers to prevent degradation caused by both light and heat include HALS compounds such as 2-hydroxy-4-methoxybenzophenone, 2-(5-chloro-(2H)-benzotriazole-2-yl)-4-methyl-6-(*tert*-butyl) phenol and 2,4-di-*tert-*butyl-6-(5-chlorobenzotriazole-2-yl) phenol; stabilizers to prevent degradation because of moisture include molecular sieves and water absorbers;

Examples of antioxidants include butylated hydroxyanisole, butylated hydroxytoluene, propylgallate, tocopherols, 2,5-di-*tert*-butyl-hydroquinone, L-ascorbic acid;

Examples of corrosion inhibitors include aminocarboxylates and metal salts of these, calcium silica phosphate, ammonium benzoate, barium, calcium, zinc and magnesium salts of alkylnaphthalene, sulfonic acids, zinc salts of cyanuric acid and 5-nitroisophthalic acids, zinc salts of dodecylnaphthalene sulfonic acid, zinc and amine complexes of toluylpropanic acid;

Examples of coalescing agents include glycols, 2-butoxy ethanol, 2,2,4-trimethyl-1,3-pentanediol monoisobutyrate, diisobutylesters of adipic, glutaric and succinic acid; Examples of thickening agents and antisettling agents include colloidal silica, hydrated aluminium silicate, aluminium tristearate, aluminium monostearate, xantan rubber, salicylic acid, fumed silica, unsaturated and hydrogenated castor oil, organomodified clay, polyhydroxycarboxylic acid amides, modified urea and polyamide waxes.

Examples of fibres include natural and synthetic inorganic fibres such as silicon fibres, metal fibres, oxide fibres, mineral fibres; natural and synthetic organic fibres such as cellulose fibres, rubber fibres, acryl fibres; or others as described in WO-0077102.

Examples of solvents.include water, aromatic hydrocarbons such as xylene, white spirit, Solvesso, toluene; aliphatic hydrocarbons such as hexane and heptane; chlorinated hydrocarbons such as dichloromethane, trichloroethane, tetrachloroethane, fluorinated hydrocarbons such as difluoromethane, difluoroethane, trifluoroethane, tetrafluoroethane; fluorochloro aliphatic and aromatic hydrocarbons such as chlorofluoromethane, chlorodifluoroethane, para-chlorobenzotrifluoride; ketones such as acetone, methyl ethyl ketone, methyl isobutyl ketone, cyclohexanone; esters such as methyl acetate, ethyl acetate, butyl acetate, *tert*-butyl acetate, ethylene glycol methyl ether acetate; ethers such as ethylene glycol dimethyl ether, diethylene glycol dimethyl ether, dibutyl ether, dioxane, tetrahydrofurane, alcohols such as methanol, ethanol, propanol, isopropanol, butanol, benzyl alcohol; ether alcohols such as butoxy ethanol, propylene glycol monomethyl ether, amides such as N-methylpyrrolidone, dimethylformamide or solvents such as dimethylsulfoxide; possibly mixtures of the above mentioned solvents.

The present invention is described more detailed in the following examples, which is to be considered solely as illustrating and not limiting.

### Examples

### Preparation of starting materials and intermediate s

### Example 1

### Synthesis av dimethyl 5,5'-[2,2-propanediyl-bis(4-phenyleneoxy)]divalerate

To a solution of sodium methoxide, from Na (1.6 g, 69.6 mmol) and dry methanol (150 ml), bisphenol A was added (15.9 g, 69.6 mmol). When everything was fully dissolved, methyl 5-bromvalerate (27.2 g, 139.2 mmol) was added and the reaction mixture was refluxed for 8 days. Then the reaction mixture was cooled to room temperature, poured into water and extracted with dichloromethane. The organic phase was dried with MgSO₄ and filtrered. Evaporation of the filtrate on Rotavapor gave a brown oil. The crude product was purified by flash chromatography (EtOAc:Hexane; gradient from 2.5-60%) twice.
Yield: 7.30 g (15.99 mmol, 44%).

### Example 2

### Synthesis av methyl 4-[1-(methoxycarbonyl)pentyloxy] benzoate

Methyl 2-bromocaproate (8.00 g, 38.3 mmol) dissolved in DMSO (50 ml) was cooled to 0°C and K₂CO₃ (5.29 g, 38.3 mmol) was added, followed by methyl 4-hydroxybenzoate (5.83 g, 38.3 mmol). The ice bath was removed after 1 hour and the reaction mixture was further stirred for 3 days/nights at room temperature. The reaction mixture was poured on ice water (500 ml) and the product was extracted with hexane (2x100 ml) and ether (100 ml). The combined organic extracts were washed with water, dried with MgSO₄, filtered and concentrated on Rotavapor. The crude product was a bright, clear liquid and was used directly without additional purification.
Yield:11.0 g (>100% contains a little moisture).

### Example 3

### Synthesis of methyl 4-[4-(metoxycarbonyl)butyloxy]benzoate

Methyl 5-bromovalerate (8.00 g, 35.9 mmol) dissolved in DMSO (50 ml) was cooled to 0°C and K₂CO₃ (4.96 g, 35.9 mmol) was added, followed by methyl 4-hydroxybenzoate (5.46 g, 35.9 mmol). Further reaction and processing of the product was carried out as described in Example 2. The crude product was then used directly without additional purification.
Yield:8.32 g (87%).

### Example 4

### Synthesis of dimethyl 4,4'-[(caproylimino)-bis(methylene)]dibenzoate

### (a) Synthesis of methyl 4-((4-(methoxycarbonyl)benzyl)iminomethyl) benzoate

Methyl 4-(aminomethyl)benzoate hydrochloride (12.6 g, 60.9 mmol) was stirred i absolute ethanol (260 ml) together with triethyl mine (8.5 ml, 60.9 mmol) and heated at reflux until everything was dissolved. Thereafter methyl 4-formylbenzoate (95% purity, 10.0 g, 60.9 mmol) was added and the reaction mixture was refluxed approximately 20 min. and then cooled to room temperature. The product started to precipitate immediately and the flask was stored in a refridgerator overnight. The next day the mixture was filtered and the product was washed with ice cold absolute ethanol. The product was then dried in an exicator.
Yield: 17.3 g, 96%

### (b) Synthesis of dimethyl 4,4'-[(iminobis(methylene)]dibenzoate

Methanol (25 ml) was cooled to 0°C before NaBH₄ (5.5 g, 140 mmol) and the compound which was synthesized under 4(a) above (16.8 g, 53.9 mmol) was added. The reaction mixture was warmed up to room temperature og then reacted until the development of gas slowed down, before further heating to reflux. After just over three hours the reaction mixture was cooled to room temperature and 3M H₂SO₄ was added to pH 8. Precipitated salts were filtered off and water was added to the filtrate. The water phase was extracted 4 times with chloroform and the whole organic phase was dried with MgSO₄ and evaporated on Rotavapor.
Yield: 13.8 g, 82%

### (c) Synthesis of dimethyl 4,4'-[(caproylimino)bis(methylene)]dibenzoate

The compound which was synthesized under Example 4Example 4(b) above (5.0 g, 16.0 mmol) was dissolved in dry pyridine (75 ml) and cooled on ice bath before caproyl chloride (2.6 ml, 19.1 mmol) was added dropwise. After the dropwise addition was completed, the reaction mixture was refluxed for approximately 1 hour. The mixture was then cooled to room temperature and evaporated on Rotavapor. The residue was dissolved i dichloromethane and washed with water, then with 1M HCl and finally with water again before it was dried with MgSO₄. After filtering and evaporation on Rotavapor the crude product was cleaned by flash chromatography through a short column (hexane / EtOAc 4:1, thereafter hexane / EtOAc 7:3). The product is a yellow-orange oil.
Yield: 6.4 g, 97%.

### Example 5

### Synthesis of dimethyl 4,4'-((acethylimino)bismethylene)dibenzoate

The product was made as described in Example 4(c). The diester which was synthesized in Example 3(b) (5.0 g, 16.0 mmol) was reacted with acetyl chloride (1.5 g, 19.1 mmol) instead of caproyl chloride. ,
Yield: 5.3 g, 93%.

### Example 6

### Synthesis of dimethyl 4,4'-((5-(benzylamino)-5-oxopentaneoylimino)bis(methylene)) dibenzoate

### (a) Synthesis of 5-(benzylamino)-5-oxopentane acid

Glutaric acid anhydride (1.00 g, 8.76 mmol) was dissolved i dry dichloromethane (100 ml), a spatula tip of *N,N*-dimethylaminopyridine (DMAP) and benzylamine (0.96 ml, 8.76 mmol) were added. The reaction mixture was stirred at room temperature under nitrogen atmosphere for 4 hours, and the product was extracted with aqueous NaOH (1 M, 3x). To the alkaline water phase aqueous HCl (3M) was added until pH 1 was reached, and the solution was extracted with chloroform (4x). The combined organic phase was dried with MgSO₄, filtered and evaporated on Rotavapor. The distillation residue was a white solid (0.482 g). The acid water phase was extracted with EtOAc (3x) to recover more product (0.844 g).
Total yield: 1.326 g (68%).

### (b) Synthesis of dimethyl 4,4'-((5-(benzylamino)5-oxopentanoylimino)bis(methylene)) dibenzoat

The dimethylester which was synthesized in Example 4(b) (5.593 g, 17.85 mmol), the 5-(benzylamino)-5-oxopentane acid which was synthesized in 6(a) above (3.95 g, 17.85 mmol) and N,N'-dicyclohexylcarbodiimide (DCC, 4.05 g, 19.63 mmol) were mixed together with dichloromethane (300 ml) and stirred at room temperature in 3 hours. Precipitated dicyclohexylurea (DCU) was filtered off and the filtrate was evaporated on Rotavapor. The crude product was used without further purification in the next reaction.

### Example 7

### Synthesis of 2,2'-(2-hydroxy-1,3-propanediyl)bis(1,3-dioxoisoindoline-5-carboxylic acid)

Trimellitic anhydride (5.0 g, 26.0 mmol) was dissolved i dry DMF at room temperature and 1,3-diamine-2-propanol (1.17 g, 13.0 mmol) dissolved in DMF was added dropwise. The reaction mixture was refluxed in N₂-atmosphere for 3 hours, the solvent was evaporated off on Rotavapor and warm water (100 ml) was added to the yellow oil. White precipitated material was filtered off and washed with water, slurried into aqueous HCl (0.5 M, 4x20 ml) on the sinter with suction between each time. Finally the substance was washed with water (2x20 ml) and dried on Rotavapor over night.
Yield: 4.5 g (79%). White powder.

### Example 8

### Synthesis of 4,4'-((2-hydroxy-1,3-propanediyl)bis(oxy)) dibenzoic acid

p-Hydroxybenzoic acid (42.8 g, 0.31 mol) was mixed with an aqueous solution of NaOH (12.4 g, 0.31 mol) in 140 ml of water. The Na-salt was then mixed together with 1,3-dichloro-2-propanol (20.0 g, 0.155 mol). To this mixture was dropwise added during 10 minutes a solution of NaOH (14.9 g) in water (35 ml). The reaction mixture was then heated to 70°C and reacted by this temperature overnight. The next day the reaction mixture was cooled to room temperature and thereafter acidified with 15% HCl (aq.) A white precipitate was formed. A small amount of water was added and the whole mixture was heated to approximately 60°C and then warm filtered. The material which remained in the filter was washed twice with warm water (60°C) and then dissolved in 10% NaHCO₃. The solution was heated to 50°C and acidified with 15% HCl. Then the solution was heated to 85°C and filtered in warm condition. Precipitated material was washed with warm water until the wash water was pH neutral. Then the substance was dried, first in exicator and finally on a freeze dryer.
Yield 32.9 g, 64%

### Example 9

### Synthesis of pentanediacid monophenyl ester

Glutaric anhydride (20 g, 0.175 mol) and *N,N*-dimethylaminopyridine (DMAP, 0.4 g) was dissolved in dry DMF (250 ml) and benzyl alcohol (18.9 g/18.1 ml, 0.175 mol) was added dropwise at room temperature under N₂-atmosphere. The reaction mixture was stirred at 40°C overnight before the solvent was removed. To the distillation residue aqueous sodium carbonate (10%, 170 ml) was added and then acidified with HCl (4M, 60 ml). An orange oil precipitated, and this was stirred in water to remove DMF-residues. The solution was extracted with ether. The organic phase was dried with MgSO₄ and filtered. Removal of solvent on Rotavapor gave an orange oil containing some DMF.
Yield: 17.31 g (46%).

### Preparation av monomers

### Example 10

### General synthesis instruction for preparation of monomers by hydrolysis of diester

Diester (1 mol eqv.) is added to a mixture of methanol and water (ratio 1:1 - 5:1). KOH or NaOH (3 mol eqv.) is added. The reaction mixture is stirred at room temperature 24 hours. The methanol is evaporated on Rotavapor. More water is added to the alkaline water residue, and extraction is carried out with dichloromethane (DCM, 2-3 times). The water phase is acidified with aqueous HCl (5M) to pH 3-4. Precipitated diacid is filtered off, washed with water and dried. The product can if necessary be purified by recrystallization.

Details on the amounts of reagents are given in Table 1.

### Example 11

### General synthesis instruction for esterifying of alcohol side group on diacid:

Diacid with alcohol side group (1 mol ekv.) is mixed with excess of pyridine. Acid chloride (3 mol eqv.) is added dropwise thereto. The reaction mixture is stirred overnight. The solvent is evaporated off on Rotavapor. Water is added to the remaining mass if necessary and pH is adjusted to 2 by addition of HCl (5M) to hydrolyze anhydride end groups. The reaction mixture is stirred by room temperature or is refluxed overnight. The mixture is filtered and the solid material is washed with dimethyl ether, water, dimethyl.ether, and is dried under reduced pressure.

### Example 12

### General synthesis instruction for esterifying of alcohol side group on diacid:

Carboxylic acid (1 mol eqv.) is dissolved in dry dichloromethane (DCM, 150 ml) together with *N,N*-dicyclohexylcarbodiimide (DCC, 1,1 mol eqv.) and a catalytic amount of *N,N*-dimethylaminopyridine (DMAP). The reaction mixture is cooled down to 0°C before adding diacid with alcohol side group (1 mol eqv.). Stirring was carried out during 4 hours at 0°C and thereafter at room temperature overnight. Precipitated dicyclohexyl urea (DCU) is filtered off. The organic phase is washed with saturated NaCl solution, dried (Na₂SO₄), and is filtered and evaporated on Rotavapor. The product is purified by means of flash chromatography.

A summary of synthesized monomers is given in Table 1

**Table 1**

| **Mono-mer No.** | **Products** | **Starting materials** | **Reactants and solvents** | **Synthesis acc. to ex. No.** | **Yield** |
|---|---|---|---|---|---|
| M1 | 5,5'-[2,2-propanediyl-bis(4-phenyleneoxy)]divaleric acid | diester as synthesized in Example 1 (7.3 g, 16.0 mmol) | methanol (50 ml), THF (50 ml) NAOH (2M, 50 ml) | 10 | 6.5 g (95%) |
| M2 | 4-(4-carboxybutoxy) benzoic acid | diester as synthesized in Example 3 (8.3 g, 31.2 mmol) | methanol (100 ml), water (100 ml) NaOH (3.6 g, 90 mmol) | 10 | 6.2 g (83%) |
| M3 | 4-[(1-carboxypentyl)oxy] benzoic acid | diester as synthesized in Example 2 (11.0 g, <100% purly) | methanol (100 ml), water (100 ml) NaOH (3.6 g, 90 mmol) | 10 | 8.4 g crude product |
| | | | | | 6.1 g after recrystallisation |
| M4 | 4,4'-[(caproylimino)-bis(methylene)] dibenzoic acid | diester as synthesized in Example 4 (14.5 g, 35.2 mmol) | methanol (250 ml), water (80 ml) KOH (85%, 7.0 g, 106 mmol) | 10 | 10.3 g (77%) |
| M5 | 4,4'-[(acetylimino)-bis(methylene)] dibenzoic acid | diester as synthesized in Example 5 (5.0 g, 14.1 mmol) | methanol (150 ml), water (35 ml) KOH (85%, 2.8 g, 42.2 mmol) | 10 | 3.8 g (83%) |
| M6 | 4,4'-[(5-(benzylamino)-5-oxopentaneoylimino)-bis(methylene)] dibenzoic acid | diester as synthesized in Example 6 (9.2 g, 17.8 mmol) | methanol (210 ml), water (45 ml) KOH(85%, 3.5g, 53.4 mmol) | 10 | 8.0g (92%) |
| M7 | 2,2'-(2-caproyloxy-1,3-propanediyl)-bis(1,3-dioxoisoindolin-5-carboxylic acid) | diacid as synthesized in Example 7 (4.3 g, 9.81 mmol) caproyl chloride (4.06 ml, 29.4 mmol) | pyridine (150 ml) | 11 | 1.2 g (23%). white powder |
| M8 | 4,4'-[(2-caproyloxy-1,3-propanediyl)-bis(oxy)] dibenzoic acid | diacid as synthesized in Example 8 (42.9 g, 129 mmol) | pyridine (650 ml) | 11 | 36.1 g, 65%. |
| | | caproyl chloride (52.1 g, 387 mmol) | | | |
| M9 | 4,4'-[(2-[5-(benzyloxy)-5-oxopentanoyl]-1,3-propanediyl)-bis(oxy)]-dibenzoic acid | diacid as synthesized in Example 8 (15.0 g, 45.1 mmol) | DCC (10.2 g, 49.6 mmol) | 12 | difficult to purify |
| | | pentanediacid monophenylenylester as synthesized in Example 9 (10.0 g, 45.1 mmol) | DMAP (catalytic amounts) | | |
| | | | DCM (150 ml) | | |

### Preparation of polymers

### Example 13

### General synthesis instruction for preparation of polymer by condensation polymerisation

### (a) General synthesis instruction for preparation of di(trimethylsilyl)ester prepolymer

One or more diacids corresponding to structure unit A (1 mol eqv.) is/are mixed with dry xylene under Ar atmosphere before adding hexamethyldisilazane (1.25 mol eqv.). The reaction mixture is reacted at 115°C. The reaction mixture is cooled down to room temperature before evaporation.

### (b) General synthesis instruction for preparation of polymer by condensation polymerisation

Di(trimethylester)ester as prepared in Example 13(a) above is mixed with thionyl chloride or diacid chloride in eqvimolar amounts and possibly catalytic amounts of triethylbenzyl ammonium chloride (TEBA-Cl). The mixture is stirred with Argon bubbling through the solution. The polymerisation temperature is increased stepwise to 180-200°C. The Ar bubbling is terminated and vakuum is put on. The reaction mixture is held at 180-200°C under vakuum for 2-6 hours. The polymer is cooled.

### Example 14

### General synthesis instruction for preparation of polymer by melt polymerisation

### (a) General synthesis instruction for preparation of prepolymer with acetic acid anhydride

One or more diacids corresponding to structure unit A alone or together with one or more diacids corresponding to structure unit B and/or diols corresponding to structure unit C are mixed with an excess of acetic acid anhydride and is heated until everything is dissolved (approximately 80-90°C). The solution is cooled down and is filtered if necessary before evaporation on Rotavapor.

### (b) General synthesis instruction for preparation of polymer by melt polymerisation

Prepolymer as prepared in Example 14(a) above is dissolved in dry dichloromethane before adding cadmium acetate dihydrate (Cd(OAc)₂ · 2H₂O). The mixture is stirred a little to get the catalyst evenly dispersed in the prepolymer. The solvent is then removed on Rotavapor. The reaction flask is coupled to vakuum (0.5-1 mbar) and is lowered into an oil bath at 150-180°C. After 30-75 minutes the mixture is cooled to room temperature. The crude product is dissolved in dichloromethane or anoher suited solvent, and is filtered if necessary, and precipitation is carried out twice in cold hexane. The precipitated polymer is dried in an exicator.

A summary of prepared polymers with composition is given in Table 2 and Table 3.

**Table 2: polymers prepared by condensation polymerisation**

| | | **P1** | **P2** | **P3** |
|---|---|---|---|---|
| Monomers (mole%) | M1 | 50 | | |
| | M2 | | 50 | |
| | M3 | | | 50 |
| | thionyl chloride | 50 | | 50 |
| | isophthaloyl dichloride | | 50 | |
| Catalyst (mole%) | TEBA-Cl | 0 | 0.09 | 0.04 |

**Tabell 3: Polymers made by melt polymerisation**

| | | **P4** | **P5** | **P6** | **P7** | **P8** | **P9** | **P10** | **P11** | **P12** | **P13** | **P14** | **P15** | **P16** |
|---|---|---|---|---|---|---|---|---|---|---|---|---|---|---|
| Monomers (mole %) | M4 | 100 | | | | | 75 | 50 | 60 | 70 | | | | 90 |
| | M5 | | 100 | | | | | | | | | | | |
| | M6 | | | 100 | | | | | | | | | | |
| | M7 | | | | 100 | | | | | | | | | |
| | M8 | | | | | | 25 | 50 | 40 | 30 | 98 | 90 | 60 | |
| | M9 | | | | | 100 | | | | | | | | |
| | sebacic acid | | | | | | | | | | 2 | 10 | 40 | |
| | bisphenol A | | | | | | | | | | | | | 10 |
| Catalyst (mole %) | Cd(OAC)₂ · 2H₂O | 3.0 | 3.0 | 3.0 | 3.0 | 3.0 | 3.0 | 3.0 | 3.0 | 3.0 | 3.0 | 3.0 | 3.0 | 5.3 |

A summary of the polymer structures of the polymer examples are given in Table 4.

**Table 4: Overiew of polymers with number and structure according to coding related to -(A)ₐ-(B)_{b}-(C)_{c}- and the structures in formula I-V.**

| Polymer No. | General formula | Structure based on encoding |
|---|---|---|
| P1 | II | a>0, b=c=0, |
| | | X_{II}=O, n=4, R⁵=-C(CH₃)₂- |
| P2 | I and IV | a>0, b>0, c=0, a:b=1:1 |
| | | I: X_{I}=O, n=3, Y_{I}=CH, Z_{I}=H, p=0 |
| | | IV: R⁹=m-phenylene, q=0, r=0, s=1 |
| P3 | I | a>0, b=c=0 |
| | | X_{I}=O, n=0, Y_{I}=CH, Z_{I}=C₄ alkyl, p=0 |
| P4 | I | a>0, b=c=0, |
| | | X_{I}=CH₂, n=0, Y_{I}=N, Z_{I}=-C(O)R¹, R¹=C₅ alkyl, p=1 |
| P5 | I | a>0, b=c=0, |
| | | X_{I}=CH₂, n=0, Y_{I}=N, Z_{I}=-C(O)R¹, R¹=C₁ alkyl, p=1 |
| P6 | I | a>0, b=c=0, |
| | | X_{I}=CH₂, n=0, Y_{I}=N, Z_{I}=C(O)R¹, R¹=-R²-C(O)NHR³, R²=C₃ alkylene, R³=benzyl, p=1 |
| P7 | III | a>0, b=c=0, |
| | | X_{III}=N, n=1, Y_{III}=CH, Z_{III}=-OC(O)-R⁷, R⁷=C₅ alkyl |
| P8 | I | a>0, b=c=0, |
| | | X_{I}= CH₂, n=1, Y_{I}=CH, Z_{I}=-OC(O)R¹, R¹=-R²-C(O)OR³, R²=C₃ alkylene, R³=benzyl, p=1 |
| P9 | I | a₁>0, a₂>0, b=c=0, a₁:a₂=75:25, |
| | | A₁: X_{I}=CH₂, n=0, Y_{I}=N, Z_{I}=-C(O)R¹, R¹=C₅ alkyl, p=1 |
| | | A₂: X_{I}=O, n=1, Y_{I}=CH, Z_{I}=-OC(O)R¹, R¹=C₅ alkyl, p=1 |
| P10 | I | a₁>0, a₂>0, b=c=0, a₁:a₂=50:50, |
| | | A₁: X_{I}=CH₂, n=0, Y_{I}=N, Z_{I}=-C(O)R¹, R¹=C₅ alkyl, p=1 |
| | | A₂: X_{I}=O, n=1, Y_{I}=CH, Z_{I}=-OC(O)R¹, R¹=C₅ alkyl, p=1 |
| P11 | I | a₁>0, a₂>0, b=c=0, a₁:a₂=60:40, |
| | | A₁: X_{I}=CH₂, n=0, Y_{I}=N, Z_{I}=-C(O)R¹, R¹=C₅ alkyl, p=1 |
| | | A₂: X_{I}=O, n=1, Y_{I}=CH, Z_{I}=-OC(O)R¹, R¹=C₅ alkyl, p=1 |
| P12 | I | a₁>0, a₂>0, b=c=0, a₁:a₂=70:30, |
| | | A₁: X_{I}=CH₂, n=0, Y_{I}=N, Z_{I}=-C(O)R¹, R¹=C₅ alkyl, p=1 |
| | | A₂: X_{I}=O, n=1, Y_{I}=CH, Z_{I}=-OC(O)R¹, R¹=C₅ alkyl, p=1 |
| P13 | I and IV | a>0, b>0, c=0, a:b=98:2, |
| | | I: X_{I}=O, n=1, Y_{I}=CH, Z_{I}=-OC(O)R¹, R¹=C₅ alkyl, p=1 |
| | | IV: R⁹=C₈ alkylene |
| P14 | I and IV | a>0, b>0, c=0, a:b=90:10, |
| | | I: X_{I}=O, n=1, Y_{I}=CH, Z_{I}=-OC(O)R¹, R¹=C₅ alkyl, p=1 |
| | | IV: R⁹=C₈ alkylene |
| P15 | I and IV | a>0, b>0, c=0, a:b=60:40, |
| | | I: X_{I}=O, n=1, Y_{I}=CH, Z_{I}=-OC(O)R¹, R¹=C₅ alkyl, p=1 |
| | | IV: R⁹=C₈ alkylene |
| P16 | I and V | a>0, b=0, c>0, |
| | | I: X_{I}=CH₂, n=0, Y_{I}=N, Z_{I}=-C(O)R¹, R¹=C₅ alkyl, p=1 |
| | | V: R¹⁰= -C₆H₄-C(CH₃)₂-C₆H₄- |

### Example 15

### Example of preparation of paint

One or more polymers (24 % by weight) is/are dissolved in cyclohexanon (29 % by weight) on a "dissolver". Copper thiocyanate (47 % by weight) is added under stirring and the paint is grinded to a fineness of grinding < 30 µm. Thickening agent (BYK 410) (0,5 % by weight) and if necessary more solvent is stirred in after grinding.

### Example 16

### Example of preparation of paint

One or more polymers (16 % by weight) is/are dissolved in cyclohexanon (20 % by weight) on a "dissolver". Copper oxide (64 % by weight) is added under stirring and the paint is grinded to a fineness of grinding < 30 µm. Thickening agent. (BYK 410) (0,5 % by weight) and if necessary more solvent is stirred in after grinding.

### Example 17

### Example of preparation of paint

One or more polymers (45 % by weight) is/are dissolved in cyclohexanone (55 % by weight). Thickening agent (BYK 410) (0,5 % by weight) and if necessary more solvent is then stirred in.

### Example 18

### Example of preparation of paint

One or more polymers (16,6 % by weight) is/are dissolved in cyclohexanone (20 % by weight) on a "dissolve". Copper oxide (29,8 % by weight), zinc oxide (28,8 % by weight), iron oxide (2,6 % by weight) and dolomite (1,7 % by weight) are added under stirring and the paint is grinded to a fineness of grinding < 30 µm. Thickening agent (BYK 410) (0,5 % by weight) and if necessary more solvent is stirred in after grinding.

### Determination of polishing rate in seawater

The polishing rate is determined by measuring the reduction in film thickness of a paint formulation over time. For this test round PVC discs are used. The discs are degreased and the paint formulations are applied in stripes radially on the disc. After application the films are dried for a minimum of 24 hours. The thickness of the dry films is measured by means of a suitable electronic measurer of film thickness. The PVC discs are mounted on a shaft which rotates in a drum where seawater flows through. Natural seawater which has been filtered and tempered to 21±2°C, is used,. The PVC discs are taken out with regular intervals for measurement of film thicknesses. The discs are then flushed with fresh water and placed for drying at room temperature overnight. The film thicknesses are measured and the discs are put back into the seawater and rotated.

Table 5 shows that the polyanhydrides polishes by exposure to seawater. The table further shows that the different polyanhydrides show a wide span in polishing rates which makes it possible to combine monomers and polymers and other paint components so that the polishing ratr which at any time is required is obtained.

**Table 5: Polishing of paint films on spinning disc in sea water.**

| **Polymer No.** | **Paint made according to example No.** | **Polishing (µm/year)** |
|---|---|---|
| P1 | 15 | >500 |
| P2 | 15 | >500 |
| P3 | 17 | >500 |
| P4 | 15 | >500 |
| P5 | 16 | >500 |
| P6 | 15 | >500 |
| P7 | 15 | >500 |
| P8 | 15 | 26 |
| P9 | 16 | 280 |
| P10 | 16 | 90 |
| P11 | 16 | 190 |
| P12 | 16 | 60 |
| P13 | 16 | <20 |
| P14 | 16 | 30 |
| P15 | 16 | >500 |
| P16 | 16 | >500 |

## Claims

1. Use of a polyanhydride represented by the formula
-(A)ₐ-(B)_{b}-(C)_{c}-,
wherein
a is an integer greater than zero,
b and c are zero or an integer greater than zero, and
a+b is an integer of 2 or more and wherein
A corresponds to one or more structures corresponding to one or more of the following general formulas I, II or III 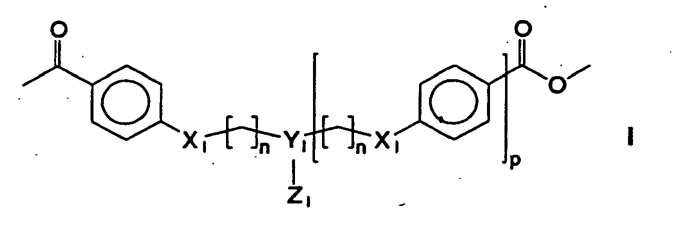 wherein
X_{I} is O, NH or CH₂
Y_{I} is N or CH
Z_{I} is H, C₁₋₁₂ alkyl, -C(O)R¹ or -OC(O)R¹
R¹ is C₁₋₁₂ alkyl, -R²-C(O)NHR³ or -R²-C(O)OR³
R² is C₁₋₈ alkylene
R³ is C₁₋₂₀ alkyl, C₆₋₂₀ aralkyl or C₆₋₂₀ aryl
n is 0 or an integer from 1 to 8 inclusive
p is 0 or 1; 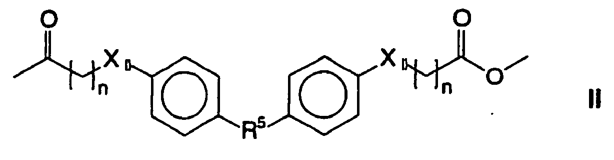
wherein
X_{II} is O, NH or CH₂
R⁵ is branched or unbranched C₁₋₈ alkylene and
n is 0 or an integer from 1 to 8 inclusive; 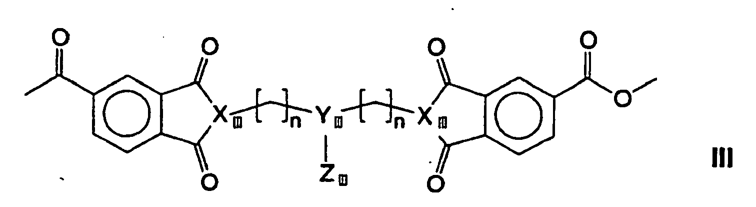
wherein
X_{III} is N or CH
Y_{III} is N or CH
Z_{III} is -C(O)R⁶ or -OC(O)R⁶
R⁶ is C₁₋₁₂ alkyl, -R⁷-C(O)NHR⁸ or -R⁷-C(O)OR⁸
R⁷ is C₁₋₈ alkylene
R⁸ is C₁₋₂₀ alkyl, aralkyl or aryl
n is 0 or an integer from 1 to 8 inclusive;
B corresponds to one or more structures with the general formula IV 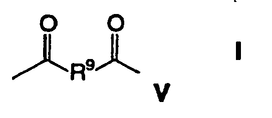 wherein
R⁹ is C₁₋₁₆-alkylene, C₆₋₂₀ aralkylene or an arbitrary combination of one or more of the units -(CH₂)_{q} -, -(O)ᵣ - and -(phenylene)ₛ -, wherein
q is 0 or an integer from 1 to 4 inclusive
r is 0 or an integer from 1 to 3 inclusive
s is 0 or an integer from 1 to 2 inclusive and
q+r+s is an integer of 1 or more.
and C corresponds to one or more structures with the general formula V
-R¹⁰-O- **V**
wherein R¹⁰ is one or more groups selected from C₆₋₂₄ arylene, C₆₋₂₀ aralkylene or C₁₋₁₆ alkylene,
for the preparation of an antifouling paint.

2. Antifouling paint,
**characterised in that** it contains a polyanhydride represented by the formula
-(A)ₐ-(B)_{b}-(C)_{c}-,
wherein
a is an integer greater than zero,
b and c are zero or an integer greater than zero, and
a+b is an integer of 2 or more and wherein
A corresponds to one or more structures corresponding to one or more of the following general formulas I, II or III 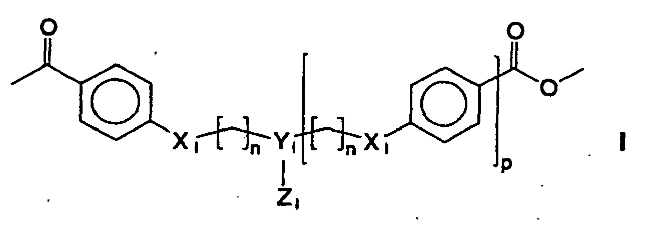 wherein
X_{I} is O, NH or CH₂
Y_{I} is N or CH
Z_{I} is H, C₁₋₁₂ alkyl, -C(O)R¹ or -OC(O)R¹
R¹ is C₁₋₁₂ alkyl, -R²-C(O)NHR³ or -R²-C(O)OR³
R² is C₁₋₈ alkylene
R³ is C₁₋₂₀ alkyl, C₆₋₂₀ aralkyl or C₆₋₂₀ aryl
n is 0 or an integer from 1 to 8 inclusive
p is 0 or 1; 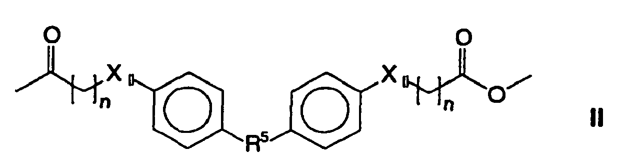
wherein
X_{II} is O, NH or CH₂
R⁵ is branched or unbranched C₁₋₈ alkylene and
n is 0 or an integer from 1 to 8 inclusive; 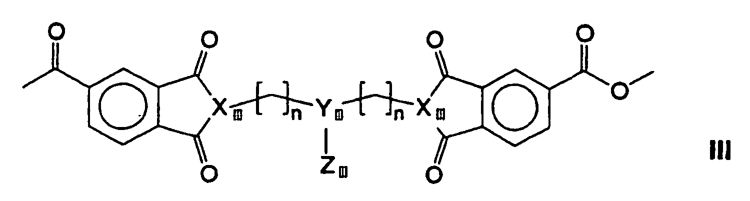
wherein
X_{III} is N or CH
Y_{III} is N or CH
Z_{III} is -C(O)R⁶ or -OC(O)R⁶
R⁶ is C₁₋₁₂ alkyl, -R⁷-C(O)NHR⁸ or -R⁷-O(O)OR⁸
R⁷ is C₁₋₈ alkylene
R⁸ is C₁₋₂₀ alkyl, aralkyl or aryl
n is 0 or an integer from 1 to 8 inclusive;
B corresponds to one or more structures with the general formula IV 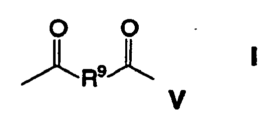 wherein
R⁹ is C₁₋₁₆ alkylene, C₆₋₂₀ aralkylene or an arbitrary combination of one or more of the units -(CH₂)_{q} -, -(O)ᵣ - and -(phenylene)ₛ -, wherein
q is 0 or an integer from 1 to 4 inclusive
r is 0 or an integer from 1 to 3 inclusive
s is 0 or an integer from 1 to 2 inclusive and
q+r+s is an integer of 1 or more.
and C corresponds to one or more structures with the general formula V
-R¹⁰-O- **V**
wherein R¹⁰ is one or more groups selected from C₆₋₂₄ arylene, C₆₋₂₀ aralkylene or C₁₋₁₆ alkylene, together with, if appropriate, additives and auxiliaries such as co-binders, pigments, solvents, biocides, antisettling agents and stabilizers.

3. Anti-fouling paint according to claim 2, in which A represent structures corresponding to the formula I wherein
Z_{I} and R¹ are C₁₋₁₂ alkyl, preferably C₁₋₈ alkyl and especially preferred C₁₋₅ alkyl,
R² is C₁₋₈ alkylene, preferably C₁₋₅ alkylene and
R³ is C₁₋₂₀ alkyl, preferably C₁₋₁₅ alkyl, especially preferred C₁₋₁₀ alkyl.

4. Antifouling paint according to claim 2, in which A represents structures corresponding to the formula II wherein
R⁵ is C₁₋₅ alkylene.

5. Antifouling paint according to claim 2, in which A represents structures corresponding to the formula III wherein
R⁶ is C₁₋₁₂ alkyl, preferably C₁₋₈ alkyl and especially preferably C₁₋₆ alkyl,
R⁷ is C₁₋₈ alkylene, preferably C₁₋₅ alkylene and
R⁸ is C₁₋₂₀ alkyl, preferably C₁₋₁₀ alkyl, especially preferred C₁₋₅ alkyl.

6. Antifouling paint according to claim 2, wherein the polyanhydride is insoluble in water, can be eroded by water and is film forming.

## Patentansprüche

1. Verwendung eines Polyanhydrids, das durch die Formel
-(A)ₐ-(B)_{b}-(C)_{c}-
wiedergegeben ist, worin
a eine ganze Zahl größer als Null ist,
b und c Null oder eine ganze Zahl größer als Null sind, und
a+b eine ganze Zahl von 2 oder mehr ist, und worin
A einer oder mehreren Strukturen entspricht, die einer oder mehreren der folgenden allgemeinen Formeln I, II oder III entsprechen 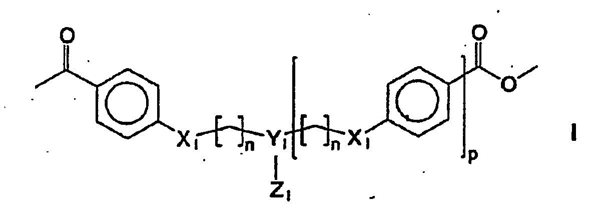 worin
X_{I} O, NH oder CH₂ ist,
Y_{I} N oder CH ist,
Z_{I} H, C₁₋₁₂-Alkyl, -C(O)R¹ oder -OC(O)R¹ ist,
R¹ C₁₋₁₂-Alkyl, -R²-C(O)NHR³ oder -R²-C(O)OR³ ist,
R² C₁₋₈-Alkylen ist,
R³ C₁₋₂₀-Alkyl, C₆₋₂₀-Aralkyl oder C₆₋₂₀-Aryl ist,
n 0 oder eine ganze Zahl von einschließlich 1 bis 8 ist,
p 0 oder 1 ist; 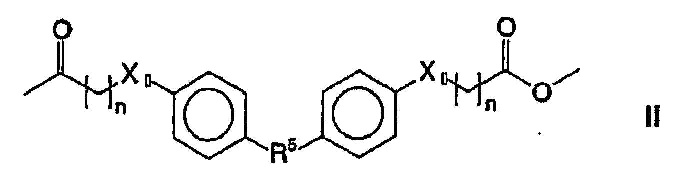
worin
X_{II} O, NH oder CH₂ ist,
R⁵ verzweigtes oder unverzweigtes C₁₋₈-Alkylen ist, und
n 0 oder eine ganze Zahl von einschließlich 1 bis 8 ist; 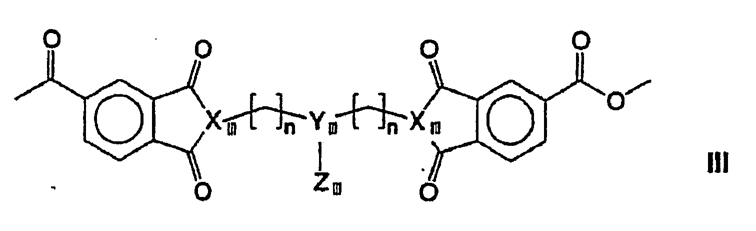
worin
X_{III} N oder CH ist,
Y_{III} N oder CH ist,
Z_{III} -C(O)R⁶, oder -OC(O)R⁶ ist,
R⁶ C₁₋₁₂-Alkyl, -R⁷-C(O)NHR⁸ oder -R⁷-C(O)OR⁸ ist,
R⁷ C₁₋₈-Alkylen ist,
R⁸ C₁₋₂₀-Alkyl, Aralkyl oder Aryl ist,
n 0 oder eine ganze Zahl von einschließlich 1 bis 8 ist;
B einer oder mehreren Strukturen mit der allgemeinen Formel IV entspricht 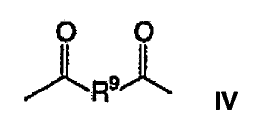 worin
R⁹ C₁₋₁₆-Alkylen, C₆₋₂₀-Aralkylen oder eine beliebige Kombination einer oder mehrerer der Einheiten -(CH₂)_{q}-, -(O)ᵣ- und -(Phenylen)ₛ- ist, worin
q 0 oder eine ganze Zahl von einschließlich 1 bis 4 ist,
r 0 oder eine ganze Zahl von einschließlich 1 bis 3 ist,
s 0 oder eine ganze Zahl von einschließlich 1 bis 2 ist,
q+r+s eine ganze Zahl von 1 oder mehr ist,
und C einer oder mehreren der Strukturen mit der allgemeinen Formel V entspricht,
-R¹⁰-O- **V**
worin R¹⁰ eine oder mehrere Gruppen, ausgewählt aus C₆₋₂₄-Arylen, C₆₋₂₀-Aralkylen oder C₁₋₁₆-Alkylen, ist,
zur Herstellung einer Antifouling-Farbe.

2. Antifouling-Farbe,
**dadurch gekennzeichnet,**
**dass** sie ein Polyanhydrid enthält, das durch die Formel
-(A)ₐ-(B)_{b}-(C)_{c}-
wiedergegeben ist, worin
a eine ganze Zahl größer als Null ist,
b und c Null oder eine ganze Zahl größer als Null sind, und
a+b eine ganze Zahl von 2 oder mehr ist, und worin
A einer oder mehreren Strukturen entspricht, die einer oder mehreren der folgenden allgemeinen Formeln I, II oder II entsprechen 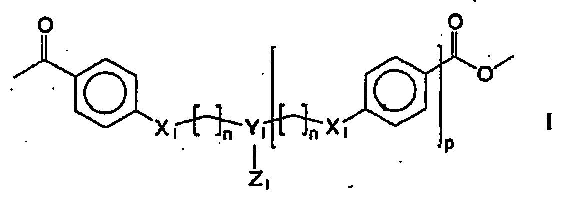 worin
X_{I} O, NH oder CH₂ ist,
Y_{I} N oder CH ist,
Z_{I} H, C₁₋₁₂-Alkyl, -C(O)R¹ oder -OC(O)R¹ ist,
R¹ C₁₋₁₂-Alkyl, -R²-C(O)NHR³ oder -R²-C(O)OR³ ist,
R² C₁₋₈-Alkylen ist,
R³ C₁₋₂₀-Alkyl, C₆₋₂₀-Aralkyl oder C₆₋₂₀-Aryl ist,
n 0 oder eine ganze Zahl von einschließlich 1 bis 8 ist,
p 0 oder 1 ist; 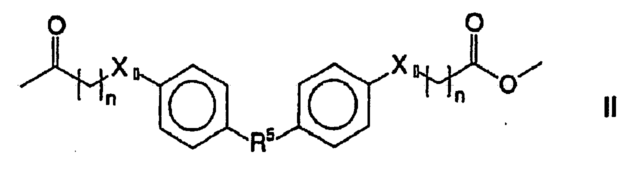
worin
X_{II} O, NH oder CH₂ ist,
R⁵ verzweigtes oder unverzweigtes C₁₋₈-Alkylen ist, und
n 0 oder eine ganze Zahl von einschließlich 1 bis 8 ist; 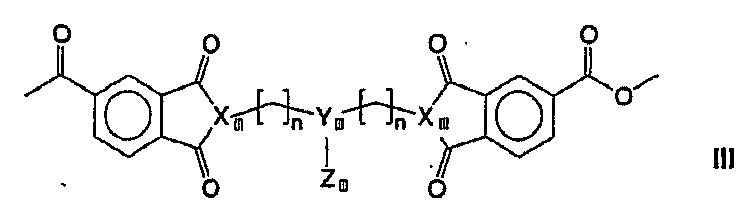
worin
X_{III} N oder CH ist,
Y_{III} N oder CH ist,
Z_{III} -C(O)R⁶, oder -OC(O)R⁶ ist,
R⁶ C₁₋₁₂-Alkyl, -R⁷-C(O)NHR⁸ oder -R⁷-C(O)OR⁸ ist,
R⁷ C₁₋₈-Alkylen ist,
R⁸ C₁₋₂₀-Alkyl, Aralkyl oderAryl ist,
n 0 oder eine ganze Zahl von einschließlich 1 bis 8 ist;
B einer oder mehreren Strukturen mit der allgemeinen Formel IV entspricht 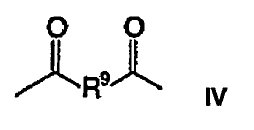 worin
R⁹ C₁₋₁₆-Alkylen, C₆₋₂₀-Aralkylen oder eine beliebige Kombination einer oder mehrerer der Einheiten -(CH₂)_{q}-, -(O)ᵣ- und -(Phenylen)ₛ- ist, worin
q 0 oder eine ganze Zahl von einschließlich 1 bis 4 ist,
r 0 oder eine ganze Zahl von einschließlich 1 bis 3 ist,
s 0 oder eine ganze Zahl von einschließlich 1 bis 2 ist, und
q+r+s eine ganze Zahl von 1 oder mehr ist,
und C einer oder mehreren der Strukturen mit der allgemeinen Formel V entspricht,
-R¹⁰-O- **V**
worin R¹⁰ eine oder mehrere Gruppen, ausgewählt aus C₆₋₂₄-Arylen, C₆₋₂₀-Aralkylen oder C₁₋₁₆-Alkylen, ist,
gegebenenfalls zusammen mit Zusatzstoffen und Hilfsmitteln wie beispielsweise Co-Bindemitteln, Pigmenten, Lösungsmitteln, Bioziden, Antiabsetzmitteln und Stabilisatoren.

3. Antifouling-Farbe nach Anspruch 2, in der A Strukturen wiedergibt, die Formel I entsprechen,worin
Z_{I} und R¹ C₁₋₁₂-Alkylen, bevorzugt C₁₋₈-Alkyl und besonders bevorzugt C₁₋₅-Alkyl sind
R² C₁₋₈-Alkylen, bevorzugt C₁₋₅-Alkylen ist, und
R³ C₁₋₂₀-Alkyl, bevorzugt C₁₋₁₅-Alkyl, besonders bevorzugt C₁₋₁₀-Alkyl ist.

4. Antifouling-Farbe nach Anspruch 2, in der A Strukturen wiedergibt, die Formel II entsprechen, worin
R⁵ C₁₋₅-Alkylen ist.

5. Antifouling-Farbe nach Anspruch 2, in der A Strukturen wiedergibt, die Formel III entsprechen, worin
R⁶ C₁₋₁₂-Alkyl, bevorzugt C₁₋₈-Alkyl und besonders bevorzugt C₁₋₅-Alkyl ist,
R⁷ C₁₋₈-Alkylen, bevorzugt C₁₋₅-Alkylen ist, und
R⁸ C₁₋₂₀-Alkyl, bevorzugt C₁₋₁₀-Alkyl, besonders bevorzugt C₁₋₅-Alkyl ist.

6. Antifouling-Farbe nach Anspruch 2, wobei das Polyanhydrid in Wasser unlöslich ist, durch Wasser erodiert werden kann und Film-bildend ist.

## Revendications

1. Utilisation d'un polyanhydride représenté par la formule
-(A)ₐ-(B)_{b}-(C)_{c}-
dans laquelle
a représente un nombre entier supérieur à zéro,
b et c sont égaux à zéro ou à un nombre entier supérieur à zéro, et
la somme a+b est égale à un nombre entier égal ou supérieur à 2, et dans laquelle
A correspond à une ou plusieurs structures correspondant à une ou plusieurs des formules générales I, II et III suivantes 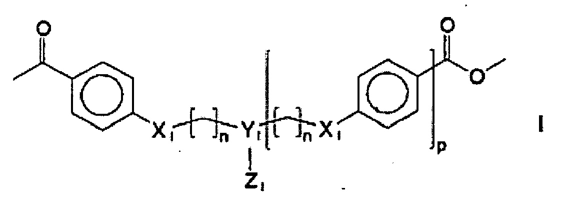 formule dans laquelle
X_{I} représente O, un groupe NH ou CH₂
Y_{I} représente N ou un groupe CH
Z_{I} représente H, un groupe alkyle en C₁ à C₁₂, -C(O)R¹ ou -OC(O)R¹
R¹ représente un groupe alkyle en C₁ à C₁₂, -R²-C(O)NHR³ ou -R²-C(O)OR³
R² représente un groupe alkylène en C₁ à C₈,
R³ représente un groupe alkyle en C₁ à C₂₀, aralkyle en C₆ à C₂₀ ou aryle en C₆ à C₂₀
n est égal à 0 ou un nombre entier de 1 à 8 inclus
p est égal à 0 ou 1 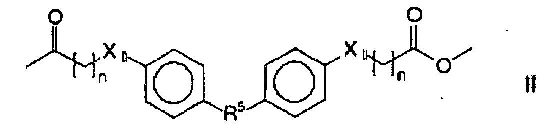
formule dans laquelle
X_{II} représente O, un groupe NH ou CH₂
R⁵ représente un groupe alkylène en C₁ à C₈ ramifié ou non ramifié et
n est égal à 0 ou à un nombre entier de 1 à 8 inclus 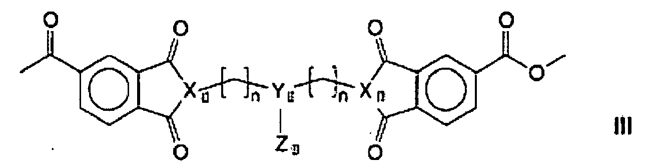
formule dans laquelle
X_{III} représente N ou un groupe CH
Y_{III} représente N ou un groupe CH
Z_{III} représente un groupe -C(O)R⁶ ou -OC(O)R⁶
R⁶ représente un groupe alkyle en C₁ à C₁₂, -R⁷-C(O)NHR⁸ ou -R⁷-C(O)OR⁸
R⁷ représente un groupe alkylène en C₁ à C₈,
R⁸ représente un groupe alkyle en C₁ à C₂₀, aralkyle ou aryle
n est égal à 0 ou à un nombre entier de 1 à 8 inclus ;
B correspond à une ou plusieurs structures de formule générale IV 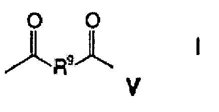 dans laquelle
R⁹ représente un groupe alkylène en C₁ à C₁₆, aralkylène en C₆ à C₂₀ ou une association arbitraire d'un ou plusieurs des motifs (CH₂)_{q}-, -(O)ᵣ- et -(phénylène)ₛ-, dans lesquels
q est égal à 0 ou à un nombre entier de 1 à 4 inclus
r est égal à 0 ou à un nombre entier de 1 à 3 inclus
s est égal à 0 ou au nombre entier 1 ou 2 inclus et
q+r+s représente un nombre entier égal ou supérieur à 1
et C correspond à une ou plusieurs structures de formule générale V
-R¹⁰-O- **V**
dans laquelle R¹⁰ représente un ou plusieurs groupes choisis entre des groupes arylène en C₆ à C₂₄, aralkylène en C₆ à C₂₀ et alkylène en C₁ à C₁₆,
pour la préparation d'une peinture anti-encrassement.

2. Peinture anti-encrassement,
**caractérisée en ce qu'**elle contient un polyanhydride représenté par la formule
-(A)ₐ-(B)_{b}-(C)_{c}-
dans laquelle
a représente un nombre entier supérieur à zéro,
b et c sont égaux à zéro ou à un nombre entier supérieur à zéro, et
la somme a+b est égale à un nombre entier égal ou supérieur à 2, et dans laquelle
A correspond à une ou plusieurs structures correspondant à une ou plusieurs des formules générales I, II et III suivantes 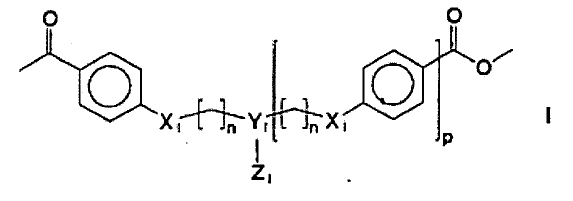 formule dans laquelle
X_{I} représente O, un groupe NH ou CH₂
Y_{I} représente N ou un groupe CH
Z_{I} représente H, un groupe alkyle en C₁ à C₁₂, -C(O)R¹ ou -OC(O)R¹
R¹ représente un groupe alkyle en C₁ à C₁₂, -R²-C(O)NHR³ ou -R²-C(O)OR³
R² représente un groupe alkylène en C₁ à C₈,
R³ représente un groupe alkyle en C₁ à C₂₀, aralkyle en C₆ à C₂₀ ou aryle en C₆ à C₂₀
n est égal à 0 ou à un nombre entier de 1 à 8 inclus
p est égal à 0 ou 1 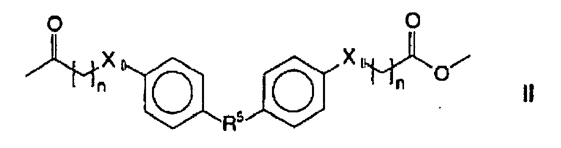
formule dans laquelle
X_{II} représente O, un groupe NH ou CH₂
R⁵ représente un groupe alkylène en C₁ à C₈ ramifié ou non ramifié et
n est égal à 0 ou à un nombre entier de 1 à 8 inclus 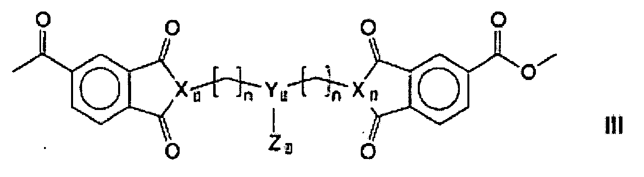
formule dans laquelle
X_{III} représente N, un groupe CH
Y_{III} représente N ou un groupe CH
Z_{III} représente un groupe -C(O)R⁶ ou -OC(O)R⁶
R⁶ représente un groupe alkyle en C₁ à C₁₂, -R⁷-C(O)NHR⁸ ou -R⁷-C(O)OR⁸
R⁷ représente un groupe alkylène en C₁ à C₈,
R⁸ représente un groupe alkyle en C₁ à C₂₀, aralkyle ou aryle
n est égal à 0 ou à un nombre entier de 1 à 8 inclus ;
B correspond à une ou plusieurs structures de formule générale IV 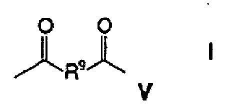 dans laquelle
R⁹ représente un groupe alkylène en C₁ à C₁₆, aralkylène en C₆ à C₂₀ ou une association arbitraire d'un ou plusieurs des motifs -(CH₂)_{q}-, -(O)ᵣ- et -(phénylène)ₛ-, dans lesquels
q est égal à 0 ou à un nombre entier de 1 à 4 inclus
r est égal à 0 ou à un nombre entier de 1 à 3 inclus
s est égal à 0 ou au nombre entier 1 ou 2 inclus et
la somme q+r+s est égale à un nombre entier égal ou supérieur à 1
et C correspond à une ou plusieurs structures de formule générale V
-R¹⁰-O- **V**
dans laquelle R¹⁰ représente un ou plusieurs groupes choisis entre des groupes arylène en C₆ à C₂₄, aralkylène en C₆ à C₂₀ et alkylène en C₁ à C₁₆, conjointement avec, si cela est approprié, des additifs et auxiliaires tels que des co-liants, des pigments, des solvants, des biocides, des agents antisédimentation et des stabilisants.

3. Peinture anti-encrassement suivant la revendication 2, dans laquelle A représente des structures correspondant à la formule I dans laquelle
Z_{I} et R¹ représentent des groupes alkyle en C₁ à C₁₂, de préférence alkyle en C₁ à C₈ et de manière particulièrement préférable alkyle en C₁ à C₅,
R² représente un groupe alkylène en C₁ à C₈, de préférence alkylène en C₁ à C₅ et
R³ représente un groupe alkyle en C₁ à C₂₀, de préférence alkyle en C₁ à C₁₅ et de manière particulièrement préférable alkyle en C₁ à C₁₀.

4. Peinture anti-encrassement suivant la revendication 2, dans laquelle A représente des structures correspondant à la formule II dans laquelle
R⁵ représente un groupe alkylène en C₁ à C₅.

5. Peinture anti-encrassement suivant la revendication 2, dans laquelle A représente des structures correspondant à la formule III dans laquelle
R⁶ représente un groupe alkyle en C₁ à C₁₂, de préférence alkyle en C₁ à C₈ et de manière particulièrement préférable alkyle en C₁ à C₅,
R⁷ représente un groupe alkylène en C₁ à C₈, de préférence alkylène en C₁ à C₅ et
R⁸ représente un groupe alkyle en C₁ à C₂₀, de préférence alkyle en C₁ à C₁₀ et de manière particulièrement préférable alkyle en C₁ à C₅.

6. Peinture anti-encrassement suivant la revendication 2, dans laquelle le polyanhydride est insoluble dans l'eau, peut être érodé par l'eau et est filmogène.
